(19) Europäisches Patentamt
European Patent Office
Office européen des brevets

(11) Publication number: **0 017 634**
**A1**

(12) # EUROPEAN PATENT APPLICATION

(21) Application number: **80850033.4**

(22) Date of filing: **20.03.80**

(51) Int. Cl.³: **C 02 F 1/52**
**C 01 F 7/74, D 21 H 3/68**

(30) Priority: **23.03.79 SE 7902651**

(43) Date of publication of application:
**15.10.80 Bulletin 80/21**

(84) Designated Contracting States:
**AT BE CH DE FR GB IT LU NL SE**

(71) Applicant: **Boliden Aktiebolag**
**Box 5508**
**S-114 85 Stockholm(SE)**

(72) Inventor: **Nilsson, Rolf Olof**
**Ransviksvägen 14**
**S-260 42 Mölle(SE)**

(72) Inventor: **Gunnarsson, Knut Lennart**
**Birkagatan 135**
**S-252 60 Helsingborg(SE)**

(74) Representative: **Lundin, Björn-Eric**
**Boliden Aktiebolag Box 5508**
**S-114 85 Stockholm(SE)**

(54) **A solid flocculating agent, a method for its manufacture and its use.**

(57) The invention relates to a solid flocculating agent comprising at least two components, of which one is aluminium sulphate comprising approximately $Al_2(SO_4)3.(12\text{-}18)H_2O$ and the other is an inorganic alkaline compound. The aluminium sulphate and the alkaline compound have such proportions that the ratio between the sum of moles of OH and OH equivalents present in the alkaline compound and the number of moles of aluminium present in the aluminium sulphate is the highest possible but not substantially exceeding a value determined by a specified graph, whereby the flocculating agent when dissolved in water in a concentration range of 0 02 2 0 moles A' 1 gives a clear solution with a high content of multi-nuclei aluminium-hydroxide complexes

The invention also relates to a method of producing such an agent, in which an aluminium-sulphate raw material and inorganic alkaline compound(s) are combined in the presence of water in an amount so that a ratio, dust-free composition is provided. The components may be combined in different ways, but it is preferred to mechanically compact an intimate mixture of the components in a finely-divided form and then disintegrate the compacted mass into particulate matter. Another preferred method comtemplates the use of a rotary furnace for producing a granular agent from aluminium sulphate granules and a finely divided alkaline compound in the presence of a minor quantity of water so that the sulphate and the alkali react with each other to form granules.

EP 0 017 634 A1

A SOLID FLOCCULATING AGENT, A METHOD FOR ITS MANUFACTURE AND ITS USE

The present invention relates to a solid flocculating agent in the form of a particulate, dust-free composition comprising at least two components, of which one is aluminium sulphate and the other is an inorganic alkaline compound. The alkaline compound is selected from the group consisting of hydroxides, carbonates and hydrocarbonates of alkali metals, preferably potassium and sodium, and oxides, hydroxides and carbonates of alkaline earth metals, preferably calcium and magnesium. The invention also relates to a method of manufacturing said flocculating agent, and also to its use, for example, for purifying water.

Solid flocculating agents comprising aluminium sulphate and an alkaline compound are known. Thus, in US-A 932795 aluminium sulphate and sodium carbonate are used either separately or mixed or in form of solutions. The proportions of the components should then be selected so as to not substantially affect the alkalinity of the liquid to be purified. US-A 2 354 146 refers to use of an agglomerated composition also comprising starch. The composition is added after the liquid has been alkalinized and the proportions between the aluminium sulphate and the alkaline compound in the composition is substantially 1:1. Use of solid basic aluminium sulphates as flocculating agents is described in US-A 1 197 123 and 1 643 962.

Earlier tests have shown that aluminium sulphate solutions used for flocculation of water, de-watering vegetable matter, sizing paper etc., can be given an increased efficiency by elevating the pH of the solutions. These findings are described in our earlier European patent publication EP-A1 00005419.

When adding alkali to an aluminium sulphate solution, its pH is raised and aluminium - hydroxide complex ions are formed. These complex ions comprise partly the single nucleus $Al(OH)^{2+}$ and $Al(OH)_2^+$, and partly the multi-nuclei which can be represented by the formula $Al_m(OH)_n^{(3m-n)+}$. In this formula m and n can take varying values

and in general the ratio n/m lies within the range of 2.3 to 2.7. Although it is difficult to exactly determine the configuration of the multi nuclei complex, it would appear that, in all events, the complex $Al_8(OH)_{20}{}^{4+}$, is present in significant quantities in the aluminium sulphate solutions in question. The aforementioned patent application describes, in more detail, the conditions in such aluminium sulphate solutions containing multi nuclei complexes.

When the alkalisation process is carried out in a suitable manner to a suitable pH value, the highest possible content of multi-nuclei complex is obtained, which is desirable with respect to the efficiency of the aluminium sulphate. Ions having a high charge have a much higher coagulating effect than ions having a lower charge within the aforementioned fields of use, and this explains why alkalised aluminium-sulphate solutions are more effective than non-alkalised aluminium sulphate solutions.

None of the prior art solid flocculating agents provides forming of multi-nuclei complexes and thus the flocculating efficiency when using the known solid agents are comparably low. The above mentioned aluminium sulphate solution containing multi-nuclei complexes which according to the description is prepared by adding an alkali in solid or liquid form to an aluminium sulphate solution has also certain disadvantages in that one is forced to handle two differing chemicals at the site of use, and to combine said chemicals in precisely defined portions. The use of a solution prepared according to above teaching requires accurate metering apparatus and effective monitoring of the process, in order that errors do not occur.

It is an object of the present invention to provide a solid flocculating agent in the form of a composition containing an aluminium sulphate component and an alkaline component, said agent providing, when dissolved, a clear solution having the desired pH value and a high content of multi-nuclei complexes. Thus, when using this novel product only one single chemical is handled at the site of use, which naturally affords a practical advantage. The solid flocculating

agent is to above mentioned object characterized in that the aluminium sulphate and the alkaline compound are present in such proportions that the ratio between the sum of moles of OH and OH equivalents present in the alkaline compound and the number of moles of aluminium present in the aluminium sulphate is the highest possible, but not substantially exceeding a value determined by a graph plotted with said ratio as the ordinate and as the abscissa the predetermined amount aluminium in moles per litre in an aqueous solution of the agent, said graph passing through the following points:

| OH/Al mole ratio | Al/l mole |
|---|---|
| 2.5 | 0.02 |
| 1.5 | 0.2 |
| 1.1 | 0.5 |
| 0.8 | 1.0 |
| 0.35 | 1.8 |
| 0.01 | 2.0 |

whereby the flocculating agent.when dissolved in water in the concentration range 0.02 - 2.0 moles Al/l provides clear solutions with a high content of multi-nuclei aluminium - hydroxide complexes.

The expression "flocculating agent" as used here and in the following should not be considered limitive of the use of the composition. Although the flocculating agent is mainly intended for purifying water, it can also be used, for example, for dewatering vegetable matter and for fixing resins on cellulose fibres when sizing paper.

The expression "OH equivalents" used here and in the following claims means the number of moles of OH which are formed when dissolving an alkaline compound in water under protolysis of the same in those cases when the alkaline compound contains basic anions other than OH.

It is another object of the present invention to provide a method of producing the novel agent, which method is characterized by combining an aluminium sulphate raw material with at least one inorganic alkaline compound selected from the group consisting of hydroxides, carbonates and hydrocarbonates of alkali metals, preferably potassium and sodium, and oxides, hydroxides and carbonates of alkaline earth metals, preferably calcium and magnesium in the presence of water in an amount so that a solid, dust-free composition is provided.

One preferred method of producing the agent contemplates using the aluminium sulphate raw material containing crystal water and the inorganic alkaline compound or compounds in a finely divided form, optionally supplying supplementary water in a finely distributed form, mechanically compacting the mixture formed, preferably in a roll mill or similar agglomerating apparatus and then disintegrating the compacted mass into particulate matter.

Another preferred method is based on the use of aluminium sulphate granules of conventional kind, to which the alkaline compound is added in a finely divided form. The two constituents can then be caused to react with one another in a suitable apparatus, for example in a rotary drum, preferably at elevated temperature, for example at a temperature of about 30-100$^{o}$C, particularly 40-70$^{o}$C.

By this latter method are obtained aluminium sulphate granules which are coated with the alkaline component and which can be suitably stabilized by adding thereto minor quantities of water, said water being supplied either in the form of fine droplets of water or in the form of condensed steam or present in the form of the water of crystallisation in the alkaline component. For the purpose of adjusting the amount of water added, part of the alkaline component can be added in hydrated form. In this way, reaction with the alkaline component takes place, at least partially, at the contact locations between aluminium sulphate and alkali. The resultant reaction products, which may be of various compositions, bring about the binding of the aluminium sulphate granules with the alkaline component.

Alternatively, the reaction in above disclosed methods can be effected with the use of aluminium sulphate, not finally crystallized, thus still containing a liquid phase with sufficient water available for the reaction, thereby obviating the need of adding external water.

When the alkaline compound is a carbonate, it will partially decompose to form carbon dioxide and water. Consequently, in this case, water must be supplied very sparingly.

An alternative method of preparing the novel composition is one in which the two components are in powder form and are granulated, in conjunction with the reaction process, in a conventional granulating apparatus while supplying water. In this way there is obtained a granular product which is fully homogenous but which, nevertheless, exhibits the favourable storage and non-dusting properties.

When applying the aforedescribed preferred methods, there is obtained a hard composition which will not create dust.

As beforementioned, when the starting material is a granulated aluminium sulphate to which a finely-divided alkaline component is added, there is obtained a granulated composition. The resultant granular product will dissolve in water in the same manner as conventional aluminium sulphate, but at a somewhat slower rate. The insoluble residue is as low as that obtained when dissolving pure aluminium sulphate, i.e. only about 0.05 %. This insoluble residue inparts to the solution a weak opalescense.

The novel composition according to the invention can be dissolved to desired concentrations within a range of 0.02 to 2 mole Al per liter. The outer limits of this range are determined by the fact that with concentrations lower than about 0.02 mole Al per liter, aluminium hydroxide will precipitate due to hydrolysis, while the upper limit corresponds to the saturation point for aluminium sulphate.

The mole ratio OH/Al in the precipitation agent can be varied as desired within the ranges disclosed in claim 1. The mole ratio OH/Al here and in the following is defined so that "OH equivalents" are included and counted as OH. Naturally, it is preferred to select a mole ratio at which the highest possible pH is obtained when the composition is dissolved in water. The highest pH which can be reached in solution at various concentrations of solution without a precipitate being formed is shown in Table 1 below, which also shows the necessary OH/Al ratio in the precipitating agent in order to obtain this pH.

TABLE 1

| Solution concentration mole Al/l | Maximum pH | The requisite OH/Al-ratio in the precipitation agent |
|---|---|---|
| 0.02 | 5.5 | 2.5 |
| 0.2 | 4.5 | 1.5 |
| 0.5 | 3.7 | 1.1 |
| 1 | 3.2 | 0.8 |
| 1.8 | 3.0 | 0.35 |
| 2 | 2.3 | close to zero |

Thus, the appropriate OH/Al-ratio is at most about 2.5, and it can be added that at higher values than 2.5 the precipitating agent is not fully soluble in water. The lower limit is not critical and can lie close to zero, although it is preferably about 0.3

As will be seen from the table, the appropriate pH in prepared solutions is 2.3-5.5.

The invention will now be described in more detail with reference to non-restricting examples of preparation, properties and use of

a composition which is suitable for a solution concentration of about 10% calculated as aluminium sulphate, and to an example of the properties of such a composition and of the use to which it can be put. The concentration corresponds to 0.32 mole Al per litre solution.

EXAMPLE 1

Granulated aluminium sulphate (having a granule size of about 1-3 mm) and comprising approximately $Al_2(SO_4)_3 \cdot 14H_2O$ was mixed with an alkaline compound in the form of a fine powder in a rotary drum on laboratory scale whilst being heated to 45-50$^oC$. A minor amount of water was sprayed in the form of fine droplets over the mixture and mixing was continued for 10 minutes without changing the temperature.

Under these conditions there were obtained products in the form of non-dust-forming granules having substantiallu the same characteristics as the original sulphate. The characteristics of the product of each test is summarized in Table 2.

TABLE 2

| Test No. | Type of alkali compound | Mole ratio OH/Al | Amount of water added to the drum g/kg ALS[1)] | Dissolution in water: Solution concentration mole Al/l | Requisite dissolution time minutes | pH in fresh solution | pH in stored solution |
|---|---|---|---|---|---|---|---|
| 1 | $Na_2CO_3$ | 1.0 | 5 | 0.32 | 30 | 4.0 | 3.8 |
| 2 | $Na_2CO_3$ | 1.2 | 5 | 0.32 | 30 | 4.1 | 3.9 |
| 3 | $Na_2CO_3$ | 1.4 | 5 | 0.32 | 60 | 4.1 | 4.0 |
| 4[2)] | $CaCO_3$ | 1.0 | 5 | 0.32 | 30 | 3.9 | 3.8 |
| 5 | $Mg(OH)_2 \cdot MgCO_3 \cdot 3H_2O$ | 1.2 | 50 | 0.32 | 120 | 4.0 | 3.8 |
| 6 | $NaHCO_3$ | 1.2 | 50 | 0.32 | 60 | 4.0 | 3.8 |
| 7 | $K_2CO_3$ | 1.2 | 5 | 0.32 | 30 | 4.1 | 3.9 |

1) ALS = aluminium sulphate

2) When dissolving the composition obtained in test 4 in water there was formed a calcium-sulphate precipitate which, however, immediately dissolved when used to flocculate impurities in water.

EXAMPLE 2

The solutions prepared from the compositions produced in example 1 were used to flocculate impurities in turbid water.

The turbid water was prepared by slurrying a minor amount of clay in tap water.

The aluminium sulphate solutions were mixed into the water by rapidly stirring the water using a gate agitator for 10 seconds. The stirring peripherical rate was then lowered to 0.1 m/s and stirring was continued for 20 minutes to flocculate the precipitated aluminium hydroxide. After a 10 minute sedimentation period the turbidity of the uppermost 30 mm of the water column, which had a total height of 150 mm, was determined. The test results are summarized below in Table 3.

TABLE 3

| Flocculating agent | Mole ratio OH:Al in the composition | pH of the solution | Added quantity Al mmole per $m^3$ | Flocculation | | |
|---|---|---|---|---|---|---|
| | | | | Flocculation pH | Turbidity FTU | |
| | | | | | Before | After |
| ALS | - | 3.0 | 128 | 6.85 | 42 | 7.6 |
| ALS+NaOH | 0.8 | 3.8 | 128 | 6.95 | 42 | 5.2 |
| ALS+NaOH | 1.2 | 4.1 | 128 | 7.10 | 42 | 3.2 |
| ALS+$Na_2CO_3$ | 1.2 | 3.9 | 128 | 7.00 | 42 | 3.5 |
| ALS | - | 3.0 | 80 | 7.00 | 220 | 28 |
| ALS+NaOH | 0.8 | 3.8 | 80 | 7.20 | 220 | 10 |
| ALS+NaOH | 1.2 | 4.1 | 80 | 7.30 | 220 | 6 |
| ALS+$Na_2CO_3$ | 1.2 | 3.9 | 80 | 7.25 | 220 | 8 |

(concl.)

| Flocculating agent | Mole ratio OH:Al in the composition | pH of the solution | Added quantity Al mmole per $m^3$ | Flocculation | | |
|---|---|---|---|---|---|---|
| | | | | Flocculation pH | Turbidity FTU | |
| | | | | | Before | After |
| ALS | - | 3.0 | 16 | 6.0 | 100 | 3.7 |
| -"- | | | 32 | 6.0 | 100 | 3.2 |
| -"- | | | 48 | 6.0 | 100 | 1.8 |
| -"- | | | 100 | 6.0 | 100 | 1.5 |
| ALS+$Mg(OH)_2$.$.MgCO_3.3H_2O$ | 1.2 | 3.8 | 16 | 6.2 | 100 | 0.7 |
| -"- | 1.2 | 3.8 | 32 | 6.2 | 100 | 0.6 |
| -"- | 1.2 | 3.8 | 48 | 6.2 | 100 | 0.7 |
| -"- | 1.2 | 3.8 | 100 | 6.2 | 100 | 0.4 |

ALS + NaOH are reference solutions prepared by alkalizing aluminium sulphate solutions with NaOH solution. The results obtained with these solutions can, as shown in the table, also be obtained with solutions prepared from a granulated mixture of ALS and $Na_2CO_3$.

CLAIMS:-

1. A solid flocculating agent in the form of a particulate, dust-free composition comprising at least two components, of which one is aluminium sulphate corresponding approximately to $Al_2(SO_4)_3 \cdot (12\text{-}18)H_2O$ and the other is an inorganic alkaline compound selected from the group consisting of hydroxides, carbonates and hydrocarbonates of alkali metals, preferably potassium and sodium, and oxides, hydroxides and carbonates of alkaline earth metals, preferably calcium and magnesium, characterized in that the aluminium sulphate and the alkaline compound are present in such proportions that the ratio between the sum of moles of OH and OH equivalents present in the alkaline compound and the number of moles of aluminium present in the aluminium sulphate is the highest possible, but not substantially exceeding a value determined by a graph plotted with said ratio as the ordinate and as the abscissa the predetermined amount aluminium in moles per litre in an aqueous solution of the agent, said graph passing through the following points:

| OH/Al mole ratio | Al/l mole |
|---|---|
| 2.5 | 0.02 |
| 1.5 | 0.2 |
| 1.1 | 0.5 |
| 0.8 | 1.0 |
| 0.35 | 1.8 |
| 0.01 | 2.0 |

whereby the flocculating agent when dissolved in water in the concentration range 0.02 - 2.0 moles Al/l provides clear solutions with a high content of multi-nuclei aluminium - hydroxide complexes.

2. A method of producing the agent according to claim 1, characterized by combining an aluminium sulphate raw material with at least one inorganic alkaline compound selected from the group consisting of hydroxides, carbonates and hydrocarbonates of alkali metals, preferably potassium and sodium, and oxides, hydroxides and carbonates of alkaline earth metals, preferably calcium and magnesium in the presence of water in an amount so that a solid, dust-free composition is provided.

3. A method according to claim 2, characterized by intimately mixing the aluminium sulphate raw material containing crystal water and the inorganic alkaline compound(s) in a finely divided form, optionally supplying supplementary water in a finely distributed form, mechanically compacting the mixture formed, preferably in a roll mill or similar agglomerating apparatus, and then disintegrating the compacted mass into particulate matter.

4. A method according to claim 2, characterized by mixing aluminium sulphate granules with the alkaline compound(s) in fine powder form, e.g. in a rotary furnace, preferably while heating said mixture, suitably to a temperature of 30-100$^{o}$C, preferably 40-70$^{o}$C, in the presence of a minor quantity of water so that the aluminium sulphate and the alkaline compound react with each other to form granules.

5. The use of a flocculating agent according to claim 1, for purifying water, dewatering vegetable matter of for sizing paper.

European Patent Office

# EUROPEAN SEARCH REPORT

0017634

Application number

EP 80 85 0033

| DOCUMENTS CONSIDERED TO BE RELEVANT | | | CLASSIFICATION OF THE APPLICATION (Int. Cl 3) |
|---|---|---|---|
| Category | Citation of document with indication, where appropriate, of relevant passages | Relevant to claim | |
| D,E | EP - A - 0 005 419 (BOLIDEN)<br>* Page 19, claim 1; page 8, example 1 *<br>-- | 1,2,5 | C 02 F 1/52<br>C 01 F 7/74<br>D 21 H 3/68 |
| A | GB - A - 442 144 (BRITISH ALUMINIUM) | | |
| A | FR - A - 2 289 447 (LAPORTE IND.) | | |
| A | DE - A - 2 617 282 (DEGREMONT) | | TECHNICAL FIELDS SEARCHED (Int.Cl 3) |
| A | US - A - 2 987 474 (AMERICAN CYANAMID) | | |
| A | DE - C - 880 877 (FARBWERKE HOECHST)<br>---- | | C 02 F 1/52<br>7/74<br>D 21 H 3/68 |

CATEGORY OF CITED DOCUMENTS

- X: particularly relevant
- A: technological background
- O: non-written disclosure
- P: intermediate document
- T: theory or principle underlying the invention
- E: conflicting application
- D: document cited in the application
- L: citation for other reasons
- &: member of the same patent family, corresponding document

X The present search report has been drawn up for all claims

| Place of search | Date of completion of the search | Examiner |
|---|---|---|
| The Hague | 23-06-1980 | TEPLY |